# EUROPEAN PATENT APPLICATION

(11) **EP 2 565 282 A2**
(43) Date of publication of application: **06.03.2013**
(21) Application number: 12182391.8
(22) Date of filing: 30.08.2012
(51) Int. Cl.: C21D 7/06, C21D 10/00, C22F 1/04, B32B 15/04, B32B 15/20, C22F 1/053

(54) **Laser shock peening of airfoils**

(30) Priority: 30.08.2011 US 201113221272
(71) Applicant: United Technologies Corporation, Hartford, CT 06101 (US)
(72) Inventor: Seetharaman, Venkatarama K., Rocky Hill, CT 06067 (US); Matz, John E., San Diego, CA 92122 (US)
(74) Representative: Hull, James Edward

(57) **Abstract**

A method of laser shock peening an aluminum alloy fan airfoil (12) to improve its resistance to failure by notched fatigue. In one example, the airfoil (12) is made from 7255 aluminum alloy. The laser has a power density of at least 10 GW/cm² (220 x 10⁹ BTU/hr·in²) and a pulse width of <50 ns to produce a shock peened layer (40) extending a depth of 0.030-0.040 inch (0.8-1.0 mm) beneath the object surface (14).

## Description

### BACKGROUND

This disclosure relates to a method of laser shock peening an object. More particularly, the disclosure relates to laser shock peening a 7000-series aluminum structure, such as a fan blade.

The airfoil section of a fan blade must withstand high cycle, notched fatigue-type loading, often resulting from scratches or dents from a variety of foreign object damage mechanisms. In general, aluminum alloys exhibit relatively low notched fatigue strengths. A common method of improving high cycle fatigue strength of a variety of metals and alloys is through shot peening which imparts compressive residual stresses near the surface. However, residual stresses generated by conventional shot peening methods are confined to a depth of less than 0.20 mm (0.008 inch) from the surface. Furthermore, conventional shot peening introduces significant amount of cold work in the surface zone that may lead to reduced ductility and toughness.

Laser shock peening (LSP) is a surface treatment process designed to improve the mechanical properties and fatigue performance of materials. LSP uses a high intensity laser and an overlay to generate high pressure shock waves on the surface of the object. An increase in fatigue strength is accomplished by the creation of large magnitudes of compressive residual stresses and increased hardness which develop in the subsurface. The maximum compressive residual stress is often formed at the surface of the object and decreases in magnitude with increasing depth below the surface. The transient shock waves can also induce microstructure changes near the surface and cause a high density of dislocations to be formed. The combined effect of the microstructure changes and dislocation entanglement contribute to an increase in the mechanical properties near the surface.

Laser shock peening has been used to strengthen airfoils, such as turbine engine fan blades constructed from titanium or nickel. Laser shock peening processes have not yet been developed for use with aluminum airfoils, such as fan blades.

### SUMMARY

Disclosed is a method of laser shock peening an aluminum alloy fan airfoil to improve its resistance to failure by notched fatigue. In one example, the airfoil is made from 7255 aluminum alloy. The laser has a power density of at least 10 GW/cm² (220 x 10⁹ BTU/hr·in²) and a pulse width of <50 ns to produce a shock peened layer extending a depth of 0.030-0.040 inch (0.8-1.0 mm) beneath the object surface.

### BRIEF DESCRIPTION OF THE DRAWINGS

The disclosure can be further understood by reference to the following detailed description when considered in connection with the accompanying drawings wherein:
Figure 1 schematically illustrates an aluminum alloy fan airfoil prior to laser shock peening.
Figure 2 schematically illustrates the fan airfoil during laser shock peening.
Figure 3 schematically illustrates the fan airfoil subsequent to shock peening.

### DETAILED DESCRIPTION

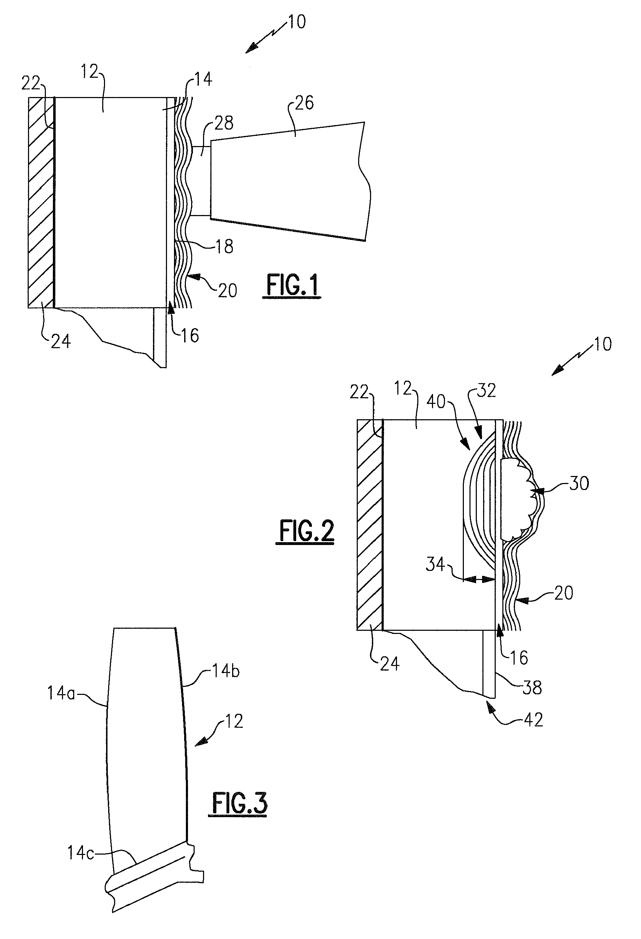

A method of laser shock peening an object is illustrated in Figures 1 and 2 using a laser shock peening system 10. Generally, a laser 26 directs a laser beam 28 at an object 12 to induce compressive residual stresses in its subsurface. In one example, the object is an aluminum fan blade (Figure 3) constructed from a 7000-series aluminum alloy, such as 7055 or 7255 aluminum alloy, which are formulated according to Aluminum Association standards and collectively referred to as a "7x55 alloy" in this disclosure. Referring to Figure 3, portions of the fan blade 12, such as the leading edge 14a, trailing edge 14b or platform 14c, may be laser shock peened.

Returning to Figure 1, an object surface 14 of the object 12 is coated with a thin layer of ablative material 16, such as a black paint or a tape that is opaque to the laser beam 28. This opaque layer provides a target surface 18 for the laser 26 and acts as a sacrificial material and is converted to high pressure plasma 30 (Figure 2) as it absorbs energy from a high energy laser (1-10 GW/cm²) for very short time durations (<50ns).

In one example, the object surface 14 is also submerged in a transparent media or tamping material 20, such as water, so that the rapidly expanding plasma 30 cannot escape and the resulting shock wave 32 is transmitted into the object's subsurface. These shock waves 32 can be much larger than the dynamic yield strength of the material (>1 GPa or >145 kpsi) and cause plastic deformation to the object surface 14 and compressive residual stresses which can extend a depth 34 (for example, 0.030-0.040 inch (0.8-1.0 mm)) beneath the object surface 14 into the subsurface. Because of the high strains/strain rates that the object 12 undergoes, there can be significant microstructure changes that can result in changes in the mechanical properties of the affected region.

In thin materials like blade edges, the laser peening shock pressure can be intense as it reaches a backside 22 of the blade opposite the object surface 14. An acoustic matched backer material 24 can be used to support the object 12 and couple out this pressure wave so as not to allow it to reflect as an undesired tensile wave. If the blade is thick enough, then the shock pressure will have sufficiently attenuated at the point of reaching the backside 22 such that it no longer yields the material and does not need to be coupled out.

Multiple LSP passes may be employed to achieve complete surface coverage and create desired residual stress profiles. LSP results in virtually unaltered surface finish of the finish machined components and limited transient heating effects, whereas the same is not true of shot peening methods. However, it should be understood that both shot and shock peening can be used on the same object in either the same or different locations. Figure 2 illustrates a portion of the object 12 having a shock peened layer 40. An adjacent portion 38 has a shot peened layer 42. The shock peened surface may adjoin or overlap the shot peened portion. Thus, the desired peening method may be employed on various features of the object depending upon the subsurface and surface strengthening desired.

Multiple LSP parameters were evaluated as a guide to achieving desired fatigue performance for a 7000-series aluminum, in particular a 7 x 55 aluminum alloy. Specimens in a baseline (as-machined) condition as well as specimens laser shock peened with various parameter combinations were tested for residual stress. The LSP parameters are denoted by the shorthand nomenclature X-Y-Z where X is the power density, Y the laser pulse width, and Z the number of layers of full laser peening coverage (i.e. 4-18-2 is 4 GW/cm2, 18 nanoseconds pulse duration, and 2 layers coverage). If the object surface 14 will be laser shock peened more than once, typically the ablative coating is reapplied to the object surface 14 and re-immersed into the tamping material 20. The laser spot overlap is 50%, in one example. In one example, the laser shape is square, although any suitable shape may be used.

**TABLE 1: Range of LSP parameters**

| | **Power Density (GW/cm2)** | **Pulse width (ns)** | **No. of layers** | **Percent Overlap** |
|---|---|---|---|---|
| Desired | 18 | 4 | 2 | 50 |
| Desired Range | 10 through 30 | 2 through 8 | 1 through 5 | 0 through 100 |

Initial experiments showed that residual stress profiles and magnitudes were not strongly dependent on the LSP parameters. The parameters of 4-18-2 provided good results (an increase in fatigue life of at least about tenfold for a constant stress), although other values within the specified range may be used.

Although an example embodiment has been disclosed, a worker of ordinary skill in this art would recognize that certain modifications would come within the scope of the claims. For that reason, the following claims should be studied to determine their true scope and content.

## Claims

1. A method of laser shock peening an object (12) comprising:
a) applying an ablative coating (16) on an object surface (14) of a 7x55 aluminum alloy object to provide a target surface (18); and
b) directing a laser beam (28) at the target surface (18), the laser having a power density of at least 10 GW/cm² and a pulse width of <50 ns to produce a shock peened layer (40).

2. The method according to claim 1, comprising the step of repeating the steps a)-b) to provide at least two shock peened layers (40).

3. The method according to claim 1 or 2, wherein the object (12) is a 7255 alloy aluminum fan blade.

4. The method according to any of claims 1 to 3, wherein the ablative coating (16) is one of tape and paint.

5. The method according to any preceding claim, comprising the step of immersing the coated object (12) in a tamping material (20).

6. The method according to claim 5, wherein the tamping material (20) is water.

7. The method according to any preceding claim, comprising the step of supporting a backside (22) of the object (12) with a material (24) in an area opposite the ablative coating (16), the material (24) attenuating the laser in the area in response to the directing step.

8. The method according to any preceding claim, wherein the power density is at least 10 GW/cm².

9. The method according to any preceding claim, wherein the pulse width is <50 ns.

10. The method according to any preceding claim, wherein the laser beam induces compressive residual stresses in the object (12) to a depth (34) of 0.030-0.040 inch.

11. The method according to any preceding claim, comprising the step of shot peening the object (12) prior to the applying step to provide a shot peened surface (42), the object surface (14) adjoining or overlapping the shot peened surface (42).

12. A laser shock peened object (12) comprising:
a 7x55 aluminum alloy object having an object surface (14); and
a portion of the object (12) having compressive residual stresses extending a depth (34) of 0.030-0.040 inch beneath the object surface (14).

13. The object (12) according to claim 12, wherein the object (12) is a 7255 aluminum alloy fan blade having a tenfold increased fatigue life for a constant stress as compared to a non-laser shock peened fan blade.

14. The object (12) according to claim 12 or 13, wherein the surface (14) is provided by at least one of a leading edge (14a), trailing edge (14b) and platform (14c) of a or the fan blade.

15. The object (12) according to any of claims 12 to 14, wherein the object (12) includes another portion (38) having a shot peened surface (42), the other portion (38) adjoining or overlapping the laser shock peened portion (40).
